# DEMANDE DE BREVET EUROPEEN

(11) **EP 0 790 371 A1**
(43) Date de publication de la demande: **20.08.1997**
(21) Numéro de dépôt: 97400311.3
(22) Date de dépôt: 12.02.1997
(51) Int. Cl.: E04F 15/024, B32B 15/08

(54) **Dalle composite pour faux-plancher**

(30) Priorité: 16.02.1996 FR 9601915
(71) Demandeur: SOLLAC, F-92800 Puteaux (FR)
(72) Inventeur: Lanos, Christian, 78180 - Montigny (FR); Lorenzini, Pascal, 57050 - Metz (FR)
(74) Mandataire: Ventavoli, Roger

(57) **Abrégé**

La dalle selon l'invention présente une structure de type sandwich à deux parements externes en tôle métallique enserrant une âme en film à base de polymère solidaire des parements, épousant leur forme et présentant une épaisseur inférieure à celle desdits parements

Cette dalle est économique, reste facilement amovible, et permet la réalisation de faux-planchers offrant à la fois une bonne résistance au feu et une bonne isolation acoustique.

## Description

L'invention concerne des dalles composites pour faux-plancher, notamment métalliques et amovibles.

Un certain nombre de locaux techniques de bâtiment sont dotés de faux-planchers formés de dalles supportées par une structure porteuse.

Ces faux-planchers techniques sont notamment conçus pour ménager, sous les dalles, suffisamment d'espace (appelé "vide technique") pour des installations techniques diverses, comme des câbles électriques, des canalisations d'eau ou des gaines de ventilation.

Les dalles du faux-plancher doivent être facilement amovibles, d'une part pour pouvoir intervenir rapidement, si besoin, sur les installations implantées dans ce "vide technique", d'autre part pour pouvoir être remplacées en cas de détérioration.

Pour être facilement amovibles, ces dalles sont par exemple légères et simplement posées sur la structure porteuse ; leur dimension peut être comprise entre 20 cm et 100 cm de côté.

L'implantation des locaux techniques et la nature des installations qu'ils contiennent, peuvent conduire à la nécessité de respecter des normes très strictes pour la protection contre le risque d'incendie, notamment au niveau des matériaux de paroi, de plafond et de sol du local technique.

Selon des normes anti-feu couramment utilisées, un matériau peut être par exemple classé :
- "M1" s'il résiste à un test normalisé NFP 92501 de non inflammabilité après exposition à un rayonnement,
- "M0" si son pouvoir calorifique supérieur mesuré selon la norme NFP 92510 reste inférieur à 500 kcal./m2,
   ... le classement M0 étant plus strict que le classement M1.

Pour être conforme à des normes anti-feu très strictes, on utilise notamment, comme dalle de faux-plancher technique, des dalles en tôle métallique, notamment d'acier.

Par ailleurs, comme certains locaux techniques sont aussi des lieux de travail de personnel - par exemple des salles d'ordinateur - on recherche une insonorisation et un confort suffisants, notamment au niveau du faux-plancher.

En effet, lorsque les installations techniques disposées sous le faux-plancher sont liées à la structure porteuse, elles sont susceptibles de provoquer des vibrations des dalles, nuisibles au confort dans le local, notamment le confort acoustique.

Pour assurer l'insonorisation des faux-planchers, on les couvre souvent d'un revêtement de sol insonorisant, par exemple une moquette, qui présente une épaisseur adaptée au niveau d'insonorisation souhaitée.

Mais la recherche de confort n'est pas forcément compatible avec la sécurité incendie.

Ainsi la demande de brevet LU 80 842 décrit un faux plancher de structure sandwich abritant une installation de chauffage par le sol ; entre les deux tôles d'acier formant ce plancher, et même sous la tôle inférieure, ce plancher comporte des couches polymères ou élastomères qui apportent le confort requis, mais au dépens de la sécurité incendie ; la tôle inférieure, la couche polymère ou élastomère intermédiaire et la tôle supérieure sont solidarisées, par exemple par collage, de manière à obtenir un plancher mécaniquement plus résistant que ne le serait une simple dalle d'acier ; par ailleurs, les jointures des tôles d'acier de la couche inférieure ne devant pas être en vis à vis des jointures des tôles d'acier de la couche supérieure, ce collage ne peut être réalisé que sur site, avec tous les désagréments de durée de chantier et de pollution de l'atmosphère du chantier relative à l'opération de collage ; enfin, un tel plancher n'est évidemment pas facilement amovible.

Quand on utilise de simples dalles d'acier, pour rester conforme aux normes de sécurité incendie tout en obtenant un bon confort acoustique, on peut aussi utiliser, au dessus du plancher, des revêtements de sol spéciaux homologués anti-feu.

Mais ces revêtements de sol sont souvent onéreux, moins résistants à l'usure que des revêtements de sol conventionnels, ne permettent généralement pas d'atteindre un classement "M0" en sécurité incendie et constituent aussi un handicap pour démonter les dalles et avoir accès au vide technique.

Ainsi, pour un faux-plancher technique, une solution classique de type (dalle ou tôle d'acier) + (couche intermédiaire et/ou revêtement de sol) présente des inconvénients économiques, des performances parfois insuffisantes en termes de sécurité incendie, d'insonorisation et/ou de résistance à l'usure, peut nuire à la commodité d'accès au vide technique et restreindre l'espace disponible sous le plancher.

La demande de brevet FR 2 683 242 propose une autre solution pour la réalisation d'un faux-plancher, qui consiste principalement en l'utilisation de dalles composites.

Chaque dalle est formée de deux panneaux métalliques dotés de rebords, emboîtables l'un dans l'autre face contre face pour former une "boîte" parallélépipédique.

On remplit cette "boîte" d'un matériau ininflammable et isolant.

Cette solution n'est pas pleinement satisfaisante sur le plan géométrique, sur le plan économique, sur le plan de l'isolation acoustique et sur le plan de la sécurité incendie.

Une telle dalle présente généralement une épaisseur supérieure à 5 mm, ce qui peut conduire à restreindre l'espace disponible sous le plancher.

La fabrication d'une telle dalle est coûteuse, parce qu'elle nécessite un grand nombre d'opérations : emboutissage de panneaux , emboîtage, remplissage des "boîtes".

Une telle dalle n'isole pas du bruit "solidien" transmis par la structure, puisque les vibrations de la structure sont transmises à la face supérieure de la dalle par les parois latérales de la "boîte".

La quantité importante de matière isolante injectée dans les "boîtes" reste pénalisante pour la résistance au feu.

L'invention a pour but d'éviter ces inconvénients.

L'invention a pour objet une dalle composite pour faux-plancher, caractérisée en ce qu'elle présente une structure de type sandwich à deux parements externes en tôle métallique enserrant une âme en film à base de polymère solidaire des parements, épousant leur forme et présentant une épaisseur inférieure à celle desdits parements.

L'invention peut également présenter une ou plusieurs des caractéristiques suivantes :
- ladite tôle métallique est une tôle d'acier.
- l'épaisseur dudit film polymère est inférieure à environ 60 µm.
- le film qui constitue l'âme est à base de polymère choisi parmi les polyesters réticulés époxy, les polyacrylates, les polyuréthanes isocyanates, ou les copolymères styrène-éthylène-butylène.
- les rebords de la dalle sont repliés dans un plan perpendiculaire à celui dudit faux-plancher.

L'invention sera mieux comprise à la lecture de la description qui va suivre, donnée à titre d'exemple non limitatif.

On prépare une structure porteuse de faux-plancher formant par exemple un réseau de barres susceptibles de supporter des dalles jointives pour former un faux-plancher.

Cette structure porteuse est posée en hauteur sur un plancher fixe, cette hauteur délimitant celle du "vide technique" souhaité sous le faux plancher.

Sur cette structure, on pose des dalles jointives pour former un faux-plancher.

Selon l'invention, ces dalles sont découpées dans des tôles métalliques de type sandwich, connues en elles-mêmes.

Ces tôles sandwich comprennent deux parements externes en tôle métallique, enserrant une âme plane polymère.

La fabrication de ces tôles dites "tôles sandwich" est connue en elle-même et ne sera décrite ici en détail.

De préférence, les tôles métalliques des parement sont des tôles d'acier.

Les tôles d'acier qu'on utilise pour ces tôles sandwich peuvent être des tôles revêtues, par exemple des tôles zinguées.

Du côté de la face supérieure du plancher, le revêtement de la tôle de parement peut être adapté à une fonction esthétique (ornementation) ou/et à une fonction anti-dérapante (rainures).

L'épaisseur de l'âme polymère est inférieure à celles des parements et reste de préférence inférieure à 60 µm environ ; de manière générale, l'épaisseur de polymère est un compromis entre l'isolation acoustique requise (épaisseur élevée) et le niveau de sécurité incendie souhaité (épaisseur faible).

L'âme de la tôle sandwich est de préférence à base de matériau polymère choisi parmi les polyesters réticulés époxy, les polyacrylates, les polyuréthanes isocyanates, ou les copolymères styrène-éthylène-butylène.

Les dalles selon l'invention peuvent être dotées de moyens de solidarisation mutuelle et/ou de moyens de solidarisation avec la structure porteuse ; ces moyens sont connus en eux-mêmes en ne seront pas décrits ici en détail.

Grâce aux dalles selon l'invention, le faux-plancher qu'on obtient reste économique, et offre à la fois une isolation acoustique et une résistance au feu satisfaisantes.

On peut obtenir les dalles en une seule opération de découpe de tôle sandwich.

Des formes de dalles plus complexes peuvent également être réalisées si besoin, par exemple des dalles à rebords repliés, les replis ayant par exemple une fonction de renfort et de raidissement mécanique, ou encore des dalles dotées de raidisseurs sur leur face inférieure.

La structure de la dalle, selon laquelle la face inférieure et la face supérieure de la dalle ne sont pas en contact direct, apporte une isolation acoustique satisfaisante, notamment vis à vis du bruit solidien qui pourrait être transmis pas la structure porteuse.

Le choix des polymères de l'âme combiné à la faible épaisseur de l'âme sont particulièrement adaptés aux normes anti-feu les plus strictes, et en particulier au classement "M0" si nécessaire.

Comme l'âme épouse la forme des parements en y adhérant sur toute la surface, le polymère de l'âme reste totalement isolé de l'air en cas d'incendie et ne risque pas de s'enflammer.

L'utilisation d'une tôle sandwich pour réaliser les dalles du faux-plancher permet de limiter l'épaisseur du faux-plancher au strict minimum.

Les dalles du faux-plancher restent très facilement amovibles, comme dans le cas de dalles en tôle métallique, et notamment lorsqu'elles restent nues.

Les dalles selon l'invention sont facilement recyclables bien que composites ; les tôles sandwich peuvent en effet être réutilisées directement comme matière première en aciérie ou en fonderie.

Selon une variante de l'invention et dans la mesure où les normes anti-feu l'autorisent, le faux-plancher réalisé avec les dalles en tôles sandwich peut être doté d'un revêtement de sol, pour améliorer encore, si besoin, le confort et le niveau d'isolation acoustique.

En tout état de cause et grâce à l'invention, le revêtement de sol qu'on utilise alors présente une épaisseur beaucoup plus faible que dans l'art antérieur et offre, en conséquence, un risque incendie moindre.

L'invention sera encore mieux comprise à la lecture de l'exemple suivant, qui se réfère aux figures annexées sur lesquelles :
- la figure 1 représente en perspective une structure porteuse de faux-plancher.
- la figure 2 représente un dallage partiel du faux-plancher de la figure 1, en vue de dessus.
- la figure 3 représente une dalle du faux-plancher de la figure 2, en perspective.
- la figure 4 représente une vue agrandie d'une portion de la tranche de la dalle de la figure 3 (partie entourée par un cercle), selon l'invention.

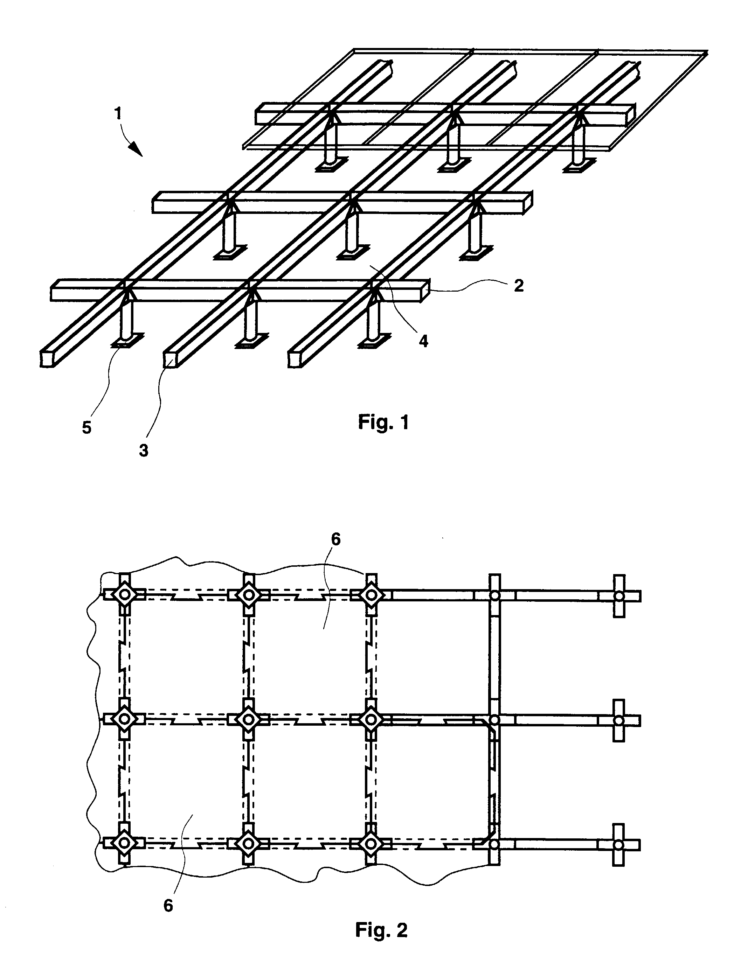

En se reportant à la figure 1, on prépare une structure porteuse 1 de faux-plancher formée d'un réseau de barres 2, 3 orthogonales délimitant entre elles des carrés 4 adaptés à la taille des dalles.

La structure 1 est supportée par des poteaux 5 posés sur un plancher fixe non représenté.

La hauteur des poteaux 5 détermine la hauteur du "vide technique" sous le faux-plancher.

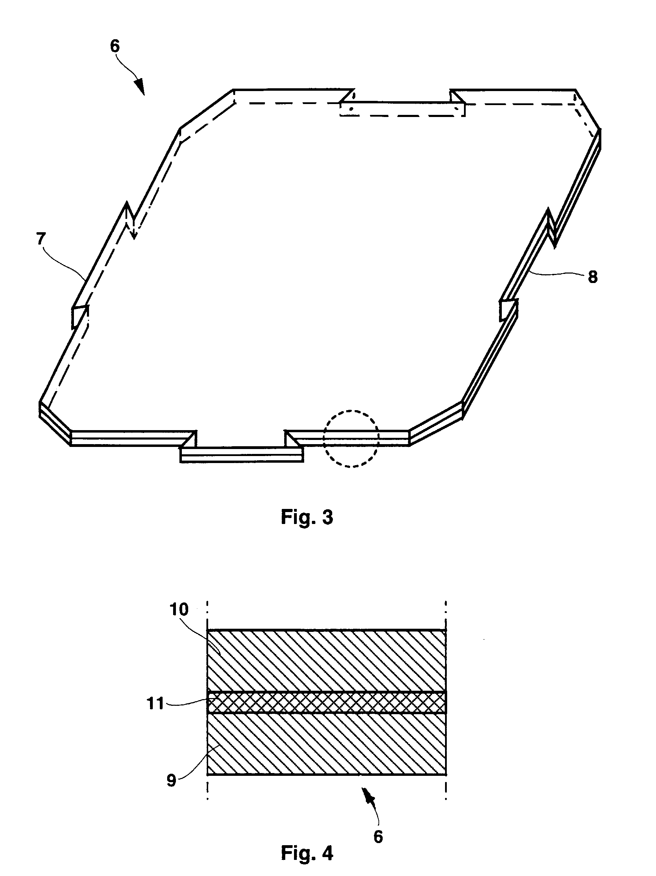

En se reportant à la figure 2, on pose sur cette structure porteuse 1 des dalles 6 selon l'invention.

Ces dalles 6 prennent appui par leur pourtour inférieur sur les côtés des carrés 4 de la structure porteuse 1 et mesurent environ 50 cm x 50 cm.

Ces dalles 6 sont dotées de moyens de solidarisation mutuelle, formés par des échancrures encastrables, mâle 7 et femelle 8, en forme de queue d'aronde, comme représenté à la figure 3.

Conformément à l'invention, la dalle 6 est découpée dans une tôle métallique de type sandwich.

Cette structure sandwich est représentée à la figure 4 et comprend deux parements plans en tôle métallique 9, 10 d'acier enserrant une âme plane 11 en polymère.

Les deux tôles métalliques 9, 10 sont identiques et présentent une épaisseur de 1,4 mm environ.

L'âme plane 11 présente une épaisseur de 45 µm environ et est essentiellement constituée de polymère de type polyester réticulé époxy.

Par rapport à une dalle en tôle d'acier classique, cette dalle 6 selon l'invention permet d'atténuer le niveau moyen d'énergie vibratoire de 10 décibels au minimum, dans le cas d'un impact représentatif d'une sollicitation d'usage ; au niveau acoustique, cette atténuation se traduit par une diminution importante de bruit dans le local où est monté le faux-plancher.

Le faux plancher ainsi réalisé par les dalles 6 selon l'invention est classé "M0" en sécurité incendie.

Le classement sécurité incendie fait ici référence à l'article 88 de l'arrêté du ministère de l'intérieur de la république française du 30 juin 1983 modifié par l'arrêté du 28 août 1991 ; le classement "M0" signifie que la dalle présente un "pouvoir calorifique supérieur" inférieur à 500 k.calories/m2 et correspond aux normes les plus strictes en matière de sécurité incendie.

Selon la charge que doit pouvoir supporter le faux-plancher selon l'invention, on peut prévoir, d'une manière connue en elle-même, des longerons supplémentaires de renfort sous les dalles, insérés dans la structure porteuse 1.

## Revendications

1. Dalle composite (6) pour faux-plancher, caractérisée en ce qu'elle présente une structure de type sandwich à deux parements externes (9, 10) en tôle métallique enserrant une âme (11) en film à base de polymère solidaire des parements (9, 10) , épousant leur forme et présentant une épaisseur inférieure à celle desdits parements (9, 10).

2. Dalle selon la revendication 1 caractérisée en ce que ladite tôle métallique est une tôle d'acier.

3. Dalle selon l'une quelconque des revendications précédentes caractérisée en ce que l'épaisseur dudit film polymère est inférieure à environ 60 µm.

4. Dalle selon l'une quelconque des revendications précédentes caractérisée en ce que le film qui constitue l'âme est à base de polymère choisi parmi les polyesters réticulés époxy, les polyacrylates, les polyuréthanes isocyanates, ou les copolymères styrène-éthylène-butylène.

5. Dalle selon l'une quelconque des revendications précédentes caractérisée en ce que ses rebords sont repliés dans un plan perpendiculaire à celui dudit faux-plancher.
